# EUROPEAN PATENT APPLICATION

(11) **EP 1 455 128 A1**
(43) Date of publication of application: **08.09.2004**
(21) Application number: 03425142.1
(22) Date of filing: 05.03.2003
(51) Int. Cl.: F16K 41/02

(54) **Guiding device for valve stem**

(71) Applicant: Scanferla, Giorgio, 36061 Bassano del Grappa (VI) (IT)
(72) Inventor: Scanferla, Giorgio, 36061 Bassano del Grappa (VI) (IT)
(74) Representative: Bottero, Claudio

(57) **Abstract**

A device (14) for guiding the sliding of a driving stem (10) of a shutter mounted in a valve body (2) of a valve assembly (1), a valve assembly (1) incorporating such device (14) and a method for mounting such device (14) in a valve body (2) of a valve assembly (1) are described.

The guiding device (14) comprises an annular body (15) intended to be mounted in a respective receiving seat (16) defined in the valve body (2) and snap coupling means (17) intended to cooperatively engage with respective coupling counter means (18) internally formed in the receiving seat (16).

In such a way, the desired seal on the stem (10) is accomplished in a mechanically simple, fast way and at a low cost.

## Description

### Background of the invention

The present invention refers to a device for guiding the sliding of a driving stem of a shutter mounted in a valve body of a valve assembly.

The present invention also refers to a valve body incorporating such device, to a valve assembly provided with such valve body, as well as to a method for mounting such device in a valve body of a valve assembly.

### Prior art

Valve assemblies for water-heating apparatuses, such as for example boilers or instant water heaters, are known, said valve assemblies essentially consisting of:
- a valve body in which at least one flowpath is defined;
- a shutter slidably mounted in the valve body for cutting off the flowpath;
- a stem for driving the shutter;
- a motor acting on the driving stem;
- a device for guiding the driving stem, the device being mounted in a respective receiving seat defined in the valve body.

It is equally known that such guiding devices should ensure the necessary seal on the stem, thus avoiding undesired fluid leakouts. Although the guiding devices of the known type are substantially suitable for the purpose, they have features and functions which contribute to maintain the production costs thereof high.

Thus, for example, valve assemblies of the above-mentioned type are known in which the driving stem of the shutter is guided by a guiding device consisting of a metal cap mounted in a fluid-tight manner in the valve body and provided with a hole axially formed in the same intended to slidably guide the stem.

The cap is further provided with a flange suitable for cooperating in abutting relationship with an annular abutment surface internally made in the valve body.

In particular, the fluid-tight seal between the cap and the valve body and the fluid-tight seal between the stem and the cap are ensured by a first annular gasket and, respectively, by at least one second annular gasket mounted adjacent to a bush of a suitable antifriction material having the purpose of facilitating the sliding of the stem.

In order to ensure the correct positioning of the cap, a ring mounted within a respective annular seat internally formed in the tubular portion of the valve body is further provided.

It is clear that such guiding device is constituted by a number of components such as to involve excessive production costs and assembly times, with a negative impact on the overall production costs of the valve assembly which can hardly be accepted by the market nowadays.

### Summary of the invention

The technical problem underlying the present invention is therefore that of providing a device for guiding the driving stem of a shutter which, once mounted in a valve body of a valve assembly, ensures both an easy sliding of the driving stem of the shutter and the absence of fluid leakouts, while being mechanically simple, of low cost and easy to be mounted.

According to the invention, this problem is solved by a guiding device comprising an annular body intended to be mounted in a respective receiving seat defined in said valve body, which guiding device is characterised in that it further comprises snap coupling means intended to cooperatively engage with respective coupling counter means internally formed in the above-mentioned receiving seat.

Thanks to the coupling achievable between the snap coupling means of the device with the respective coupling counter means formed in the valve body, it is firstly advantageously possible to achieve the desired seal on the stem in a mechanically simple manner and, as such, at a low cost.

Secondly, the number of components constituting the guiding device of the invention is advantageously reduced with respect to the number of components provided in the prior art devices, with a further reduction of the costs of the guiding device of the invention.

The snap coupling method between the device and the valve body of the valve assembly, finally, advantageously allows an easy and fast mounting and, correspondingly, demounting of the guiding device in and, respectively, from the valve body.

In accordance with a preferred embodiment of the guiding device of the invention, the above-mentioned snap coupling means comprises a plurality of fins extending from the annular body, whereas the above-mentioned coupling counter means comprises at least one first annular shoulder internally formed in the receiving seat defined in the valve body.

Thanks to the provision of such a plurality of fins extending from the annular body of the sealing device intended to cooperate with such annular shoulder internally formed in the receiving seat defined in the valve body, it is advantageously possible to obtain a coupling between the guiding device and the valve body which is mechanically simple and at a low cost.

In accordance with a preferred embodiment of the guiding device of the invention, the above-mentioned snap coupling means comprises a plurality of angularly staggered fins extending from the annular body in a direction inclined by a predetermined angle with respect to the longitudinal axis of the body, whereas the above-mentioned coupling counter means comprises at least one first annular shoulder internally formed in the receiving seat defined in the valve body.

Thanks to the provision of the above-mentioned fins in a direction inclined by a predetermined angle with respect to the longitudinal axis of the annular body, it is advantageously possible to facilitate the insertion of the guiding device in the valve body.

In accordance with a preferred embodiment, the fins extend from the annular body in a direction inclined by an angle comprised between about 5° and about 45° with respect to the longitudinal axis of the body.

In such a way, the coupling between the guiding device and the valve body is advantageously optimised in terms of increased ease of insertion of the guiding device in the valve body and in terms of improved stability of coupling of the fins of the guiding device with the above-mentioned first annular shoulder defined in the valve body.

Preferably, the above-mentioned coupling means comprises four fins and, still more preferably, eight angularly staggered fins.

In such a way, the risk that the fins are deformed due to the effect of the coupling between the guiding device and the valve body is advantageously minimised.

In accordance with a preferred embodiment, the guiding device of the invention further comprises a second annular shoulder internally formed in said receiving seat at a distance substantially equal to the length of said fins with respect to said first annular shoulder.

Thanks to the provision of such second annular shoulder in the valve body, a first portion of the fins, namely the portion of the fins arranged in the proximity of the annular body, is advantageously supported by the second shoulder, thus further facilitating the positioning and insertion of the free ends of the fins in the first annular shoulder.

In accordance with a preferred embodiment, the annular body of the guiding device and the plurality of fins are integrally made of elastically deformable material.

Thanks to such preferred feature, it is advantageously possible to manufacture the guiding device by means of a simple and, as such, economically advantageous manufacturing process, such as for example, as better illustrated hereafter, a moulding process.

Preferably, the annular body of the guiding device and the plurality of fins are integrally made of plastic material.

Thanks to the possibility of manufacturing the guiding device by a means of a moulding process of plastic material, it is advantageously possible to achieve a further reduction in the manufacturing costs of the guiding device of the invention.

Moreover, the use of a plastic material as a preferred material for manufacturing the guiding device of the invention advantageously allows to obtain a self-lubricating device, with a consequent further improvement of the sliding action of the driving stem and an increase in the useful life of the guiding device.

Still more preferably, the plastic material is selected from the group comprising: polyoxymethylene (POM), polyamide (PA), polyphenylene sulfide (PPS), polyphenylene sulfone (PPSU).

In accordance with a further preferred embodiment of the guiding device of the invention, an annular recess is defined in the annular body of the same, the recess being circumferentially formed in a radially outer portion of the body and being intended to receive at least one first sealing gasket for the fluid-tight seal between the guiding device and the valve body.

In such a way, the fluid-tight sealing action between the guiding device and the valve body is advantageously improved with an extremely limited increase in costs, such as those attributed to a sealing gasket.

Preferably, an annular recess is defined in the annular body of the guiding device, which recess is circumferentially formed in a radially inner portion of the body and intended to receive at least one second sealing gasket for the fluid-tight seal between the guiding device and the stem.

In such a way, the fluid-tight sealing action between the guiding device and the stem is advantageously improved with an extremely limited increase in costs, such as that attributed to a sealing gasket.

The present invention also provides a valve body for a valve assembly comprising a guiding device as defined above, the guiding device being mounted in a respective receiving seat defined in the valve body.

In accordance with a preferred embodiment of the valve body of the invention, this further comprises a first sealing gasket for the fluid-tight seal between the guiding device and the valve body, said first sealing gasket being received in an annular recess circumferentially formed in a radially outer portion of the guiding device.

In accordance with a further preferred embodiment of the valve body of the invention, the above-mentioned first sealing gasket comprises a gasket of the O-ring type.

Preferably, the valve body of the invention further comprises at least one second sealing gasket for the fluid-tight seal between the guiding device and the stem, said second sealing gasket being received in an annular recess circumferentially formed in an annular radially inner portion of the guiding device.

Still more preferably, the above-mentioned at least one second sealing gasket comprises a pair of O-rings, preferably reciprocally separated by a washer.

In accordance with a preferred embodiment, the valve body of the invention further comprises a bush made of a suitable plastic material, such as for example POM, which is mounted adjacent to the above-mentioned at least one second sealing gasket.

Advantageously, in such a way the axial guiding of the driving stem of the shutter is further improved.

Preferably, in the above-mentioned annular radially inner portion of the guiding device, at the position intended to be touched by fluid, the valve body of the invention further comprises an annular element made of self-lubricating soft material, such as for example polytetrafluoroethylene (PTFE), intended to clean the stem from solid particles possibly present in the fluid flowing in the valve body, which are typically of calcareous nature. In such a way, the above-mentioned sealing O-rings are advantageously protected from the erosive action of the calcareous deposits.

The present invention also provides a valve assembly as defined by the attached claim 17.

Finally, the present invention provides a method for mounting a guiding device in a valve body of a valve assembly as defined by the attached claim 18.

### Brief description of the drawings

Additional features and advantages of the invention will be apparent from the description of a preferred embodiment of a device for guiding the sliding of a driving stem of a shutter mounted in a valve body of a valve assembly, of a valve body incorporating such device and of a valve assembly provided with such valve body according to the invention, given hereafter for illustrative and not limiting purposes, with reference to the accompanying drawings. In such drawings:
- figure 1 is a partial view, in longitudinal section, of a valve assembly incorporating a device for guiding the sliding of a driving stem of a shutter mounted in a valve body of a valve assembly according to the present invention;
- figure 2 is a view, in partial longitudinal section, of the valve assembly of figure 1.

### Detailed description of the preferred embodiments

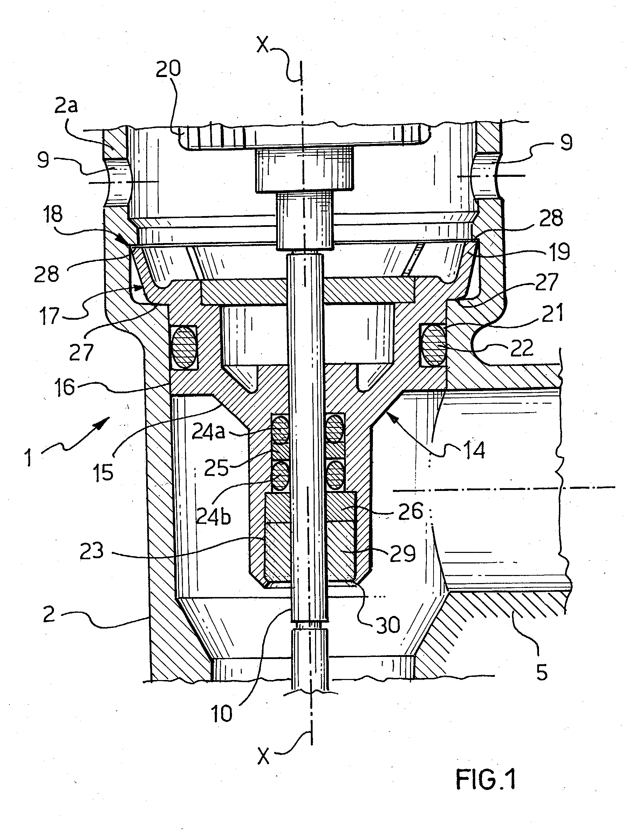

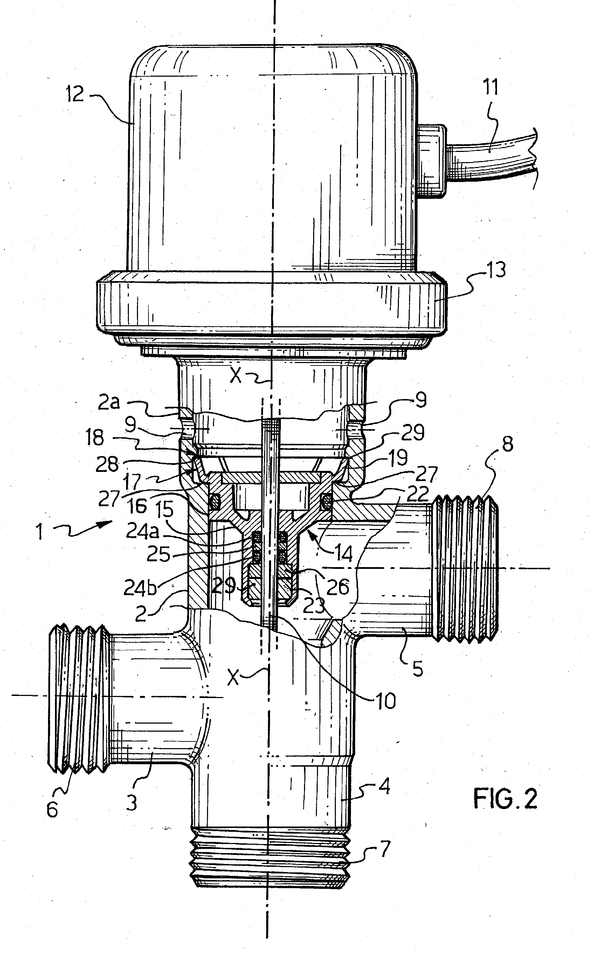

With reference to figures 1 and 2, a valve assembly in accordance with a first embodiment of the invention is generally indicated with 1. In particular, the valve assembly 1 is a three-way valve intended to be mounted in domestic water-heating apparatuses, such as for example gas-fired boilers.

In the illustrated embodiment, the valve assembly 1 comprises a valve body 2 in which at least one flowpath is defined. In the illustrated case, a fluid inlet conduit 3, a first fluid outlet conduit 4 and a second fluid outlet conduit 5 are formed in the valve body 2. In particular, the inlet and outlet conduits 3, 4 and 5 are externally threaded, respectively by threads 6, 7 and 8, for threadably coupling, in a way conventional *per se,* to the ends of threaded fittings (not shown) of respective water circuits, also not shown.

In the illustrated embodiment, the valve body 2 comprises a motor compartment 2a in which a plurality of radial holes, indicated with 9, is preferably arranged, which holes are circumferentially arranged in an equidistant manner and are suitable for allowing the removal from the motor compartment 2a of fluid possibly leaked therein.

The valve assembly 1 also comprises a shutter, which is conventional *per se* and not shown, slidably mounted in the valve body 2 for cutting off the above-mentioned flowpath, a stem 10 for driving the shutter and a motor 20 acting on the driving stem 10.

The motor 20 is partially received in the motor compartment 2a and is supplied by power supply means by means of an electric cable 11. In the preferred embodiment illustrated in the above-mentioned figures, the motor 20 is coupled with the valve body 2 by means of a locking nut 13 and is covered by a box-shaped cover 12 having a protective function.

Finally, the valve assembly 1 of the invention comprises a device 14 for guiding the driving stem 10 according to the invention.

As better illustrated in figure 1, the guiding device 14 comprises an annular body 15 adapted to receive the driving stem 10 of the shutter and intended to be mounted in a respective receiving seat 16 defined in the valve body 2. In accordance with the invention, the guiding device 14 further comprises snap coupling means 17 intended to cooperatively engage with respective coupling counter means 18 internally formed in the receiving seat 16 of the annular body 15.

Thanks to the mechanical simplicity of the guiding device 14, it is advantageously possible to accomplish the desired sliding of the driving stem 10 of the shutter in a simple and cost-effective manner and, at the same time, to mount the guiding device 14 in the valve body 2 in a simple and fast manner.

In accordance with the illustrated preferred embodiment, the guiding device 14 includes snap coupling means 17 comprising a plurality of fins 19 extending from the annular body 15, whereas the coupling counter means 18 comprises a first annular shoulder 28 and a second annular shoulder 27 internally formed in the receiving seat 16.

More in detail, as illustrated in figure 1, the first and second annular shoulders 28, 27 essentially consist of respective side walls of the above-mentioned receiving seat 16 spaced apart by a distance substantially equal to the length of the fins 19 and preferably orientated substantially perpendicularly with respect to the longitudinal axis X-X of the annular body 15.

Preferably, the fins 19 are angularly staggered and extend in a direction inclined by a predetermined angle with respect to such axis X-X. In accordance with the illustrated preferred embodiment, the fins 19, in number of eight, are inclined by an angle equal to about 15° with respect to the longitudinal axis X-X of the annular body 15.

In accordance with the illustrated preferred embodiment, the annular body 15 and the plurality of fins 19 are integrally made of elastically deformable material, such as for example plastic material. For illustrative purposes, the guiding device 14 of the invention is made of polyoxymethylene (POM).

Furthermore, an annular recess 21 is preferably defined in the annular body 15, the recess being circumferentially formed in a radially outer portion of the body 15 and being intended to receive at least one first sealing gasket, such as a gasket 22 of the O-ring type, for the fluid-tight seal between the guiding device 14 and the valve body 2, so as to advantageously avoid any leakage of fluid from the valve body 2 to the motor compartment 2a through the gap defined between the valve body 2 and the radially outer portion of the annular body 15.

Furthermore, an annular recess 23 is preferably defined in the annular body 15, the recess being circumferentially formed in a radially inner portion of the body 15 and being intended to receive at least one second sealing gasket for the fluid-tight seal between the guiding device 14 and the driving stem 10 of the shutter. In such a way, any leakage of fluid from the valve body 2 to the motor compartment 2a through the gap defined between the driving stem 10 and the radially inner portion of the annular body 15 is advantageously avoided.

For illustrative purposes, the second sealing gasket may comprise a pair of sealing O-rings 24a, 24b, preferably reciprocally separated by a spacing washer 25, in such a manner to further improve the fluid-tight seal between the driving stem 10 of the shutter and the annular body 15.

In accordance with the preferred embodiment illustrated in figures 1-2, a bush 26 made of suitable plastic material, such as for example POM, is further mounted adjacent to the pair of O-rings 24a, 24b for further improving the guiding function of the driving stem 10 in the axial direction.

In the illustrated preferred embodiment, adjacent to the bush 26 and at the position intended to be touched by the fluid, an annular element 29 made of self-lubricating soft material, such as for example PTFE, is also mounted. The annular element 29 is in particular intended to clean the stem from calcareous deposits normally present in the fluid flowing in boilers, thus preserving the sealing O-rings 24a, 24b.

In accordance with the illustrated preferred embodiment, the annular recess 23 extends up to the free end of the annular body 15 and the latter is preferably provided with a rim 30 intended to maintain in position the sealing O-rings 24a, 24b, the washer 25 spacing these, the bush 26 and the annular element 29.

With reference to the valve assembly 1 illustrated above, a method for mounting the guiding device 15 in the valve body 2 of the valve assembly 1 will be now described.

In a preliminary step of the method, the O-ring 22 is arranged in the annular recess 21 circumferentially formed in the radially outer portion of the annular body 15, whereas the pair of O-rings 24a, 24b, the washer 25, the bush 26 and the annular element 29 are housed in the annular recess 23 circumferentially formed in the radially inner portion of the annular body 15.

After having mounted the driving stem 10 within the annular body 15, in accordance with the invention, the mounting method comprises the step of coupling in a snap-fit manner the guiding device 14 in the respective receiving seat 16 defined in the valve body 2 by snap coupling the plurality of fins 19 with the first shoulder 28 formed in the receiving seat 16.

More in detail, a first portion of the fins 19, namely the portion arranged closest to the annular body 15, is positioned at the second shoulder 27, whereas the free ends of the fins 19 are positioned at the first annular shoulder 28, so as to easily cooperate therewith in a snap-fit manner.

Clearly, a man skilled in the art may introduce changes and variants to the invention described hereinabove in order to satisfy specific and contingent application requirements, variants and changes which anyhow fall within the scope of protection as defined by the following claims.

Thus, for example, in some applications in which the fluid pressure is low, the first annular shoulder defined in the valve body and, correspondingly, the free ends of the coupling fins may be suitably bevelled, so as to allow the reversible mounting of the guiding device in the valve body in a simple and fast manner without causing any phenomenon of wear neither on the guiding device nor on the valve body.

From what has been described above, the multiple advantages achieved by the guiding device of the present invention are immediately clear, and notably the constructive simplicity and low cost thereof and the possibility of carrying out an easy mounting thereof in the valve body of a valve assembly.

## Claims

1. Device (14) for guiding the sliding of a driving stem (10) of a shutter mounted in a valve body (2) of a valve assembly (1), said device (14) comprising an annular body (15) intended to be mounted in a respective receiving seat (16) defined in said valve body (2), **characterised in that** said device further comprises snap coupling means (17) intended to cooperatively engage with respective coupling counter means (18) internally formed in said receiving seat (16).

2. Device (14) according to claim 1, wherein said snap coupling means (17) comprises a plurality of fins (19) extending from said annular body (15) in a direction inclined by a predetermined angle with respect to the longitudinal axis (X-X) of said body (15), and wherein said coupling counter means (18) comprises at least one first annular shoulder (28) internally formed in said receiving seat (16).

3. Device (14) according to claim 2, wherein said angle is comprised between about 5° and about 45°.

4. Device (14) according to claim 2, further comprising a second annular shoulder (27) internally formed in said receiving seat (16) at a distance substantially equal to the length of said fins (19) with respect to said first annular shoulder (28).

5. Device (14) according to any one of the preceding claims, wherein said annular body (15) and said plurality of fins (19) are integrally made of elastically deformable material.

6. Device (14) according to claim 5, wherein said annular body (15) and said plurality of fins (19) are integrally made of plastic material.

7. Device (14) according to claim 6, wherein said plastic material is selected from the group comprising: polyoxymethylene (POM), polyamide (PA), polyphenylene sulfide (PPS), polyphenylene sulfone (PPSU).

8. Device (14) according to claim 1, wherein an annular recess (21) is defined in said annular body (15), said recess being circumferentially formed in a radially outer portion of said body (15) and intended to receive at least one first sealing gasket (22) for the fluid-tight seal between said device (14) and said valve body (2).

9. Device (14) according to claim 1 or 8, wherein an annular recess (23) is defined in said annular body (15), said recess being circumferentially formed in a radially inner portion of said body (15) and intended to receive at least one second sealing gasket (24a, 24b) for the fluid-tight seal between said device (14) and said stem (10).

10. Valve body (2) for a valve assembly (1) comprising a guiding device (14) according to any one of the preceding claims, said guiding device being mounted in a respective receiving seat (16) defined in said valve body (2).

11. Valve body (2) according to claim 10, further comprising a first sealing gasket (22) for the fluid-tight seal between said guiding device (14) and said valve body (2), said first sealing gasket (22) being received in an annular recess (23) circumferentially formed in a radially outer portion of the guiding device (14).

12. Valve body (2) according to claim 11, wherein said first sealing gasket comprises a gasket (22) of the O-ring type.

13. Valve body (2) according to claim 11 or 12, further comprising at least one second sealing gasket (24a, 24b) for the fluid-tight seal between said guiding device (14) and said stem (10), said second sealing gasket (24a, 24b) being received in an annular recess (23) circumferentially formed in an annular radially inner portion of the guiding device (14).

14. Valve body (2) according to claim 13, wherein said at least one second sealing gasket comprises a pair of O-rings (24a, 24b).

15. Valve body (2) according to claim 14, wherein said O-rings (24a, 24b) are reciprocally separated by a washer (25).

16. Valve body (2) according to claim 13, further comprising a bush (26) made of a suitable plastic material mounted adjacent to said at least one second sealing gasket (24a, 24b).

17. Valve assembly (1) comprising:
- a valve body (2) in which at least one flowpath is defined;
- a shutter slidably mounted in said valve body (2) for cutting off said flowpath;
- a stem (10) for driving said shutter;
- a motor (20) acting on said driving stem (10);
- a guiding device (14) according to any one of claims 1-9 for guiding said driving stem (10), said device (14) being mounted in a respective receiving seat (16) defined in said valve body (2).

18. Method for mounting a guiding device (14) in a valve body (2) of a valve assembly (1), comprising the step of snap coupling a guiding device (14) according to any one of claims 1-9 in a respective receiving seat (16) defined in the valve body (2).
